Europäisches Patentamt

European Patent Office

Office européen des brevets

(19)

(11) Numéro de publication: **0 063 708**
**A1**

(12) **DEMANDE DE BREVET EUROPEEN**

(21) Numéro de dépôt: 82102764.6

(22) Date de dépôt: 01.04.82

(51) Int. Cl.³: **F 26 B 7/00**, F 26 B 23/00, F 26 B 25/00, F 26 B 20/00

(30) Priorité: 06.04.81 FR 8106856

(71) Demandeur: **APPAREILS ET EVAPORATEURS KESTNER, 7, rue de Toul, F-59003 Lille (FR)**

(43) Date de publication de la demande: 03.11.82
**Bulletin 82/44**

(72) Inventeur: **Leleu, René, 7, rue de Toul, F-59003 Lille (FR)**

(74) Mandataire: **Casalonga, Axel et al, BUREAU D.A. CASALONGA OFFICE JOSSE & PETIT Baaderstrasse 12-14, D-8000 München 5 (DE)**

(84) Etats contractants désignés: **AT BE CH DE GB IT LI LU NL SE**

(54) Méthode de séchage économique et installation pour sa mise en oeuvre.

(57) L'invention est du domaine du séchage des produits et articles divers, conditionnés ou bruts.

Elle vise plus précisément une méthode dans laquelle la vapeur provenant d'un produit traité dans un évaporateur (E) est comprimée dans un compresseur (C) qui lui confère un gradient de surchauffe, après quoi cette vapeur surchauffée est transférée à un sécheur (S) où elle se refroidit tout en s'enrichissant en humidité, avant d'être recyclée à l'évaporateur (E) d'où elle est issue.

Application aux économies d'énergie dans les processus de séchage.

1

0063708

Méthode de séchage économique et installation pour sa mise en oeuvre.

La présente invention a pour objet une méthode de séchage économique pour articles et produits divers, bruts ou conditionnés, ainsi qu'une installation de séchage pour la mise en oeuvre de cette méthode.

Il est bien connu que dans tous les systèmes d'évaporation par recompression mécanique de la vapeur, cette dernière sort du compresseur, surchauffée, c'est-à-dire à une température supérieure à sa température de condensation sous la pression régnant au refoulement du compresseur. Cette surchauffe inévitable, qui correspond à l'énergie fournie par le compresseur à une masse constante de vapeur, est d'autant plus importante que l'élévation de la pression réalisée par le compresseur est élevée.

La surchauffe de la vapeur comprimée, qui est le plus souvent gênante pour le fonctionnement de l'évaporateur à recompression mécanique de vapeur, est usuellement abattue par une injection contrôlée d'eau, que l'on réalise soit à la sortie du compresseur, soit à l'entrée de cet appareil, ou bien dans le corps même du compresseur selon les types de machine retenus.

Dans la plupart des installations de séchage de l'art antérieur, le séchage des produits est le plus souvent réalisé par mise en contact du produit à sécher avec un gaz non saturé en solvant à évaporer, ce qui conduit à un transfert de matière du corps en cours de séchage aux gaz environnants qui s'enrichissent de ce fait en solvant. Dans un grand nombre de cas, le gaz est simplement de l'air chaud qui s'enrichit en humidité aux dépens du produit.

Il est certain que de tels appareils sont particulièrement consommateurs d'énergie, et que l'on a intérêt à les faire précéder d'un évaporateur qui élimine le maximum de solvants compatibles avec le type d'opération, avant l'introduction du produit au sécheur.

0063708

Enfin, il est bien connu que, dans un sécheur du type évoqué ci-dessus, le gaz peut être n'importe quel gaz connu et que la vapeur surchauffée peut sans inconvénient constituer ce gaz de séchage.

Le but de l'invention est d'obvier aux inconvénients précités de gaspillage d'énergie en fournissant une nouvelle méthode de séchage économique mettant en oeuvre au moins une unité constituée par un évaporateur, un compresseur et un sécheur, cette méthode étant caractérisée par le fait que la vapeur émise par l'évaporateur est comprimée à l'étage du compresseur, ce qui lui confère un gradient de surchauffe, que cette vapeur surchauffée est transférée au sécheur où elle se refroidit tout en s'enrichissant en humidité jusqu'à un point proche de la saturation, après quoi cette vapeur est récupérée afin d'être recyclée pour le chauffage de l'évaporateur.

Cette méthode consiste donc à utiliser la vapeur surchauffée issue d'un compresseur de vapeur, comme gaz provoquant le transfert de matière et d'énergie dans le sécheur. En effet, la mise en contact d'un produit humide à sécher avec de la vapeur surchauffée va provoquer le transfert du solvant du produit vers le gaz qui va tendre à se saturer en solvant.

Dans le cas particulier où l'eau est le solvant, on aura donc à l'entrée du sécheur un produit humide et de la vapeur surchauffée, et à la sortie du sécheur de la vapeur ayant perdu son gradient de surchauffe et proche de la saturation, ainsi qu'un produit séché.

L'état de siccité du produit obtenu dépendra, comme dans les sécheurs communément utilisés, de la proportion de solvant à éliminer dans la masse du produit à sécher, et de la capacité d'absorption de ce solvant par la quantité correspondante de gaz mise en oeuvre dans l'opération de séchage. Cet état de siccité dépendra également du temps de contact des deux constituants et de l'aptitude du produit à se sécher, ces phénomènes étant bien connus dans la technologie du séchage.

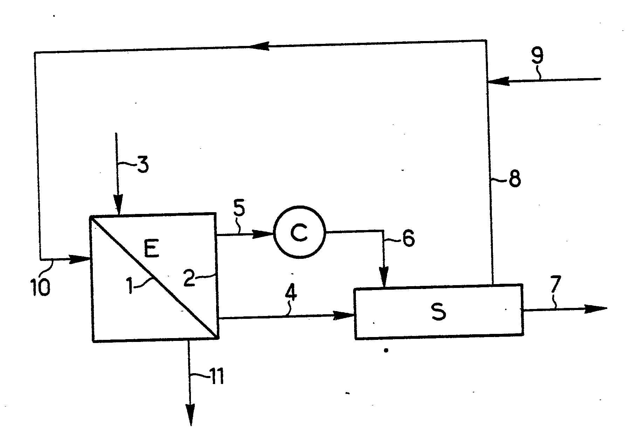

L'invention vise également une installation pour la mise en oeuvre du procédé de séchage spécifié ci-dessus. On décrira ci-après une forme de réalisation de cette installation, à

0063708

titre d'exemple non limitatif en référence au dessin annexé, dans lequel la figure unique est une vue schématique de l'installation de séchage en question.

Sur le dessin, l'évaporateur E comporte au moins une surface d'échange 1 et une enveloppe 2. La solution à traiter est introduite en 3 dans l'évaporateur pour venir en contact avec la surface d'échange 1 où elle se concentre par évaporation. Cette solution sort concentrée par la conduite 4, tandis que la vapeur est extraite par la conduite 5.

Cette conduite 5 transfère la vapeur au compresseur C où elle est comprimée tout en étant surchauffée, après quoi elle est envoyée par la conduite 6 dans le sécheur S où elle est mise en contact avec le produit à sécher provenant de la conduite 4 et extrait enfin du processus de séchage par la conduite 7.

La vapeur refroidie et ayant perdu son gradient de surchauffe sort du sécheur par le conduit 8 pour être recyclée en 10 à l'évaporateur E où sa condensation apporte la chaleur nécessaire à l'évaporation de la solution à traiter. Le condensat de la vapeur de chauffage est extrait par la conduite 11. Sur le conduit 8 on peut éventuellement assurer un appoint de solution par le conduit 9.

Il est à noter que la vapeur sortant du sécheur S, conjointement avec le produit séché, sera donc proche de l'état de saturation et sera par conséquent, tout à fait apte à être utilisée au chauffage de l'évaporateur dont elle est issue, réalisant ainsi un cycle de pompe à chaleur.

Il est clair que l'invention n'est nullement limitée à la forme de réalisation décrite ci-dessus en référence au dessin annexé, mais qu'elle englobe toutes les modifications et variantes à la portée de l'homme de l'art, issues du même principe de base. C'est ainsi que l'on peut mettre en oeuvre le procédé de l'invention en utilisant n'importe quel type d'évaporateur, de compresseur ou de sécheur pourvu qu'il soit adapté aux conditions particulières d'utilisation et au produit à sécher.

0063708

On peut également incorporer dans l'installation un appareil permettant de donner au produit concentré avant son introduction dans le sécheur, toute forme particulière permettant de faciliter son séchage, d'en améliorer la présentation et analogue.

De même, les produits traités à l'évaporateur et au sécheur peuvent être indifféremment le même produit à des degrés variables d'humidité, passant d'un appareil à l'autre, intégralement ou partiellement, ou bien des produits différents en qualité et/ou en quantité.

## REVENDICATIONS

1. Méthode économique de séchage pour articles et produits divers, bruts ou conditionnés, mettant en oeuvre au moins une unité de séchage constituée d'un évaporateur, d'un compresseur et d'un sécheur, caractérisée par le fait que la vapeur émise par l'évaporateur est comprimée par le compresseur, ce qui lui confère un gradient de surchauffe, que cette vapeur surchauffée est transférée à un sécheur où elle se refroidit tout en s'enrichissant en humidité jusqu'à un point proche de la saturation, après quoi cette vapeur est récupérée afin d'être utilisée pour le chauffage de l'évaporateur d'où elle est issue.

2. Méthode selon la revendication 1, caractérisée par le fait que les produits traités à l'évaporateur et au sécheur peuvent être indifféremment les mêmes produits à des degrés variables d'humidité, passant d'un appareil à l'autre, intégralement ou partiellement, ou bien des produits différents en qualité et/ou en quantité.

3. Installation de séchage pour la mise en oeuvre de la méthode selon la revendication 1, caractérisée par le fait qu'elle comporte : au moins un évaporateur (E) comportant au moins une surface d'échange (1); un compresseur (C) relié par un conduit (5) à l'évaporateur; et un sécheur raccordé au compresseur par un conduit de transfert de vapeur (6), ce sécheur étant en outre relié à l'évaporateur d'une part par des moyens de transfert (4) du produit à traiter et d'autre part par un conduit (8) de recyclage de la vapeur à l'évaporateur d'où elle est issue.

4. Installation selon la revendication 3, caractérisée par le fait qu'elle comporte en outre un appareil permettant de donner au produit concentré avant son introduction au sécheur toute forme particulière permettant de faciliter son séchage et d'améliorer sa présentation ou analogue.

Office européen
des brevets

**RAPPORT DE RECHERCHE EUROPEENNE**

0063708
Numéro de la demande

EP  82 10 2764

## DOCUMENTS CONSIDERES COMME PERTINENTS

| Categorie | Citation du document avec indication. en cas de besoin, des parties pertinentes | Revendication concernee | CLASSEMENT DE LA DEMANDE (Int. Cl. ³) |
|---|---|---|---|
| X | FR-A-2 348 726  (SASAKURA) <br> * en entier * <br><br> --- | 1-3 | F 26 B    7/00 <br> F 26 B  23/00 <br> F 26 B  25/00 <br> F 26 B  20/00 |
| X | CH-A- 236 576  (BROWN BOVERI) <br> * en entier * <br><br> --- | 1-3 | |
| A | EP-A-0 019 594  (GLATT) <br> * en entier * <br><br> --- | 4 | |
| A | CH-A- 229 247  (BROWN BOVERI) <br><br> --- | | |
| A | CH-A- 236 704  (BROWN BOVERI) <br><br> --- | | |
| A | CH-A- 229 249  (OERLIKON) <br><br> ----- | | **DOMAINES TECHNIQUES RECHERCHES (Int. Cl. ³)** <br><br> F 26 B <br> B 01 D |

Le present rapport de recherche a ete etabli pour toutes les revendications

| Lieu de la recherche <br> LA HAYE | Date d achevement de la recherche <br> 20-07-1982 | Examinateur <br> DE RIJCK F. |
|---|---|---|